# EUROPÄISCHE PATENTANMELDUNG

(11) **EP 0 860 645 A2**
(43) Veröffentlichungstag der Anmeldung: **26.08.1998**
(21) Anmeldenummer: 97121522.3
(22) Anmeldetag: 06.12.1997
(51) Int. Cl.: F16L 55/165, B29C 63/34, E03F 3/06

(54) **Verfahren zur Sanierung von Kanalrohren und Inlinerschlauch zur Verwendung bei einem solchen Verfahren**

(30) Priorität: 22.02.1997 DE 19707126
(71) Anmelder: TEERBAU GmbH, D-45257 Essen (DE)
(72) Erfinder: Reckziegel, Dieter, Prof. Dr.-Ing., 64625 Bensheim (DE); Odenwald, Ralf, Dipl.-Ing. (FH), 16727 Velten (DE); Dienemann, Bernd, Dr.-Ing., 45149 Essen (DE)
(74) Vertreter: Patentanwälte Gesthuysen, von Rohr, Weidener, Häckel

(57) **Zusammenfassung**

Gegenstand der Erfindung ist ein Verfahren zur Sanierung von Kanalrohren mit folgenden Verfahrensschritten:

Ein mehrlagiger, harzgetränkter Inlinerschlauch wird in den betroffenen Kanalabschnitt eingebracht. Der im Kanalabschnitt liegende Inlinerschlauch wird durch Einleiten eines Druckmediums, z. B. Druckluft, aufgerichtet und an die Innenwandung des Kanalabschnittes angedrückt (kalibriert). Der kalibrierte Inlinerschlauch wird durch ein Aushärtungsverfahren, z. B. durch Einstrahlung von UV-Licht, ausgehärtet.

Dieses Verfahren ist gekennzeichnet durch folgende Merkmale:

In einem Vorbereitungsschritt wird für das konkrete Kanalprofil errechnet, welche Abschnitte auf dem Umfang des im Kanalrohr kalibrierten Inlinerschlauches besonders beul- und durchschlagsgefährdet sind. Es wird ein Inlinerschlauch verwendet, der in den wesentlichen oder in allen besonders beul- und durchschlagsgefährdeten Abschnitten mit Verstärkungen versehen ist. Gegenstand der Erfindung ist auch ein Inlinerschlauch (1) zur Verwendung bei einem Verfahren zur Sanierung von Kanalrohren, der sich dadurch auszeichnet, daß er in bestimmten, zuvor für das konkrete Kanalprofil errechneten bzw. ermittelten Abschnitten (3) mit Verstärkungen (4) versehen ist.

## Beschreibung

Die Erfindung betrifft ein Verfahren zur Sanierung von Kanalrohren unter Einsatz eines Inlinerschlauches mit den Merkmalen des Oberbegriffs von Anspruch 1 sowie einen Inlinerschlauch zur Verwendung in einem Verfahren zur Sanierung von Kanalrohren mit den Merkmalen des Oberbegriffs von Anspruch 7.

Als Alternative zur kosten- und zeitaufwendigen Sanierung von Kanalrohren in offener Bauweise haben sich Schlauch-Relining-Verfahren bewährt, die z. B. durch den Einbau von harzgetränkten Inlinerschläuchen, die unter Einwirkung von UV-Licht oder durch externe Wärmezufuhr aushärten, die Sanierung des Kanalrohrs kostengünstig ermöglichen. Diese Sanierungsverfahren bieten sich sowohl bei begehbaren als auch bei nichtbegehbaren Kanalrohren an.

Für das Einbringen des Inlinerschlauches in den jeweiligen Abschnitt des zu sanierenden Kanalrohrs sind zwei verschiedene Verfahrenstechniken bekannt, nämlich das Einziehen des Inlinerschlauches in zusammengelegtem Zustand sowie das Umstülpen des Inlinerschlauches in den Kanalabschnitt hinein jeweils mit anschließendem Anpressen an die Wandung mittels Wasser, Luft oder anderen Medien. Einen Überblick gibt dazu die DE - A - 41 13 002.

Die vorliegende Erfindung betrifft ein Verfahren, bei dem der Inlinerschlauch nach beiden Verfahren in den betroffenen Kanalabschnitt eingebracht werden kann. Er wird dann mit Druckluft oder einem anderen Druckmedium aufgerichtet und an die Innenwandung des Kanalabschnittes angedrückt (kalibriert) und anschließend mit UV-Licht oder durch Erwärmen des Druckmediums ausgehärtet.

Natürlich strebt man an, den Inlinerschlauch mit möglichst geringer Wanddicke auszuführen, da die Querschnittsverringerung des Kanalrohrs durch die statisch erforderliche Wanddicke des Inlinerschlauches bestimmt wird. Je nach Rohrdurchmesser liegen die Wanddicken meist zwischen 2 und 20 mm.

Der Inlinerschlauch muß auch bei noch tragfähigem Kanalrohr so dimensioniert werden, daß er dem Wasseraußendruck langfristig standhält. Da sich der Inlinerschlauch beim Aushärten des Harzes um ein geringes Maß zusammenzieht, entsteht zwischen der Außenseite des Inlinerschauches und der Innenwand des alten Kanalrohres ein Ringspalt, in den von außen her Wasser einsickern kann. Dieser Ringspalt reduziert die Standsicherheit des Inlinerschlauches. Das Ergebnis sind Beulen im Inlinerschlauch, die bis zum Durchschlagen des Inlinerschlauches mit Folge einer erheblichen Querschnittsverringerung des Kanalrohrs führen können.

Statische Berechnungen führen dazu, daß die Wanddicke des Inlinerschlauches vergrößert wird. Dabei kann es sich ergeben, daß Wanddicken von 30 mm und mehr erforderlich sind, um ein Einbeulen oder Durchschlagen zu verhindern. Das Problem ist aber, daß sich dadurch der Strömungsquerschnitt des sanierten Kanalrohrs gegenüber dem berechneten Strömungsquerschnitt des alten Kanalrohrs zu stark verringert.

Ein Inlinerschlauch ist aus mehreren Lagen hergestellt und besteht in den einzelnen Lagen aus Faservlies, Fasergewebe, Fasergelege etc. Die einzelnen Faser- und Vliesschichten haben dabei lose überlappende Ränder. Bislang hat man vorgesehen, die Überlappungen von Schicht zu Schicht gegeneinander zu versetzen und gleichmäßig über den Umfang des Inlinerschlauchs zu verteilen (siehe die DE - A - 41 13 002). Für den Schichtaufbau von solchen Inlinerschläuchen gibt es vielerlei Vorschläge (DE - C - 44 27 633, DE - A- 41 13 002), auf diesen Stand der Technik darf verwiesen werden. Entsprechende mehrlagige Inlinerschläuche sollen auch bei der Lehre der vorliegenden Erfindung Verwendung finden.

Der Erfindung liegt die Aufgabe zugrunde, das bekannte Verfahren so auszugestalten und weiterzubilden, daß eine hohe Standsicherheit und Langzeitstabilität mit geringer Wahrscheinlichkeit von Beulen und Durchschlägen mit einem Inlinerschlauch erreicht wird, der andererseits den Strömungsquerschnitt des Kanalrohres so wenig wie möglich verringert.

Die zuvor aufgezeigte Aufgabe ist bei einem Verfahren mit den Merkmalen des Oberbegriffs von Anspruch 1 durch die Merkmale des kennzeichnenden Teils von Anspruch 1 gelöst. Ein Inlinerschlauch, der in einem solchen Verfahren eingesetzt werden kann, ist Gegenstand des Anspruch 7.

Die Lehre der Erfindung erreicht die Lösung der zuvor aufgezeigten Aufgabe dadurch, daß zunächst errechnet wird, welche Abschnitte auf dem Umfang des im Kanalrohr kalibrierten Inlinerschlauches besonders beul- und durchschlagsgefährdet sind. Auf der Grundlage dieser Daten wird dann der Inlinerschlauch in den besonders beul- und durchschlagsgefährdeten Abschnitten gezielt verstärkt, insbesondere eben in seiner Wanddicke vergrößert. Entgegen der ausdrücklichen Zielrichtung des Standes der Technik, die Wanddicke möglichst gleichmäßig über den Umfang des Inlinerschlauches zu realisieren, werden ganz gezielt bestimmte Abschnitte hervorgehoben.

Ein nach dem erfindungsgemäßen Verfahren saniertes Kanalrohr ist so saniert, daß es allen statischen, mechanischen, thermischen und chemischen Anforderungen optimal entspricht.

Zur weiteren Ausgestaltung des erfindungsgemäßen Verfahrens darf auf die Unteransprüche verwiesen werden. Hervorgehoben werden darf, daß bei einem eiförmigen Kanalprofil Verstärkungen in den Seitenabschnitten vorgesehen sein sollten. Die Praxis hat gezeigt, daß diese Seitenabschnitte, besonders beulempfindlich sind. Bei einem kreisförmigen Kanalprofil hängt es vom jeweiligen Einzelfall ab, wo besonders beul- und durchschlagsgefährdete Abschnitte des Kanalrohrs liegen, denen man mit entsprechenden Verstärkungen des Inlinerschlauches entsprechen muß.

Die Lehre der Erfindung läßt sich gezielt dahingehend erweitern, daß besonders starke Deformationen des konkreten Kanalprofils ermittelt und der Inlinerschlauch zusätzlich zu eventuellen Verstärkungen mit einer entsprechenden Aufpolsterung bzw. entsprechenden Aufpolsterungen versehen wird. Anders als Verstärkungen dienen diese Aufpolsterungen der gezielten Vergrößerung der Wanddicke des Inlinerschlauches in diesem Bereich zum Ausgleich von Deformationen des alten Kanalrohrs.

Gegenstand des Anspruchs 7 ist ein Inlinerschlauch, der in einem Verfahren der in Rede stehenden Art zweckmäßig eingesetzt werden kann.

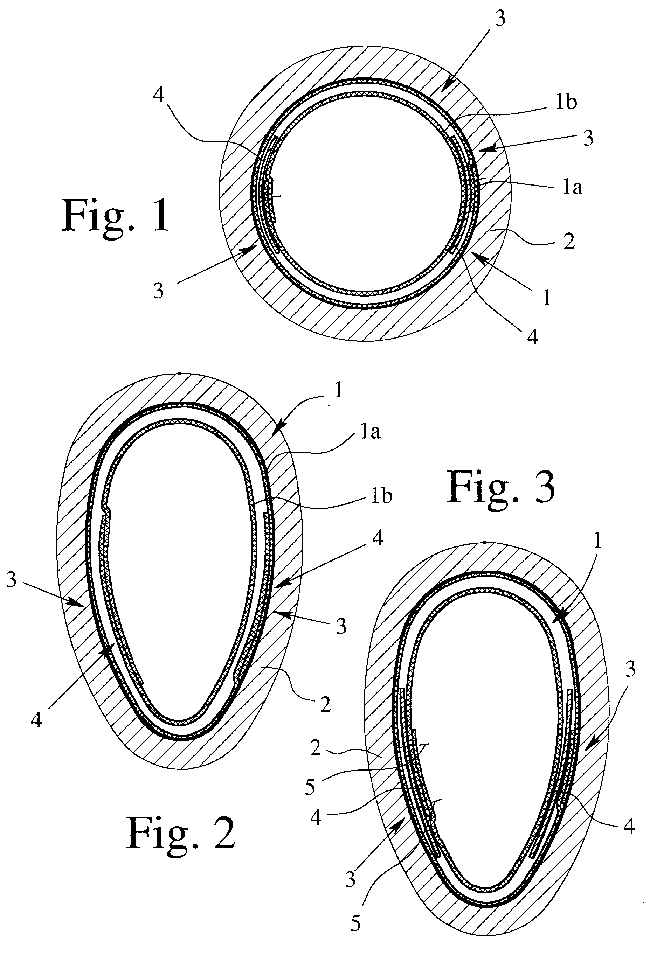

Im folgenden wird die Erfindung anhand einer Ausführungsbeispiele darstellenden Zeichnung näher erläutert. Die einzelnen Figuren (Fig. 1 bis 7) der Zeichnung zeigen jeweils einen Kanalabschnitt mit Inlinerschlauch in schematischer Darstellung.

In der Zeichnung nicht weiter dargestellt ist das Verfahren zur Sanierung von Kanalrohren gemäß der Erfindung selbst, insoweit sind prinzipielle Darstellungen beispielsweise in der DE - A - 22 40 153 zu finden. Wesentlich ist, daß mit dem vorliegenden Verfahren sowohl im Umstülpverfahren, als auch im Einziehverfahren gearbeitet werden kann. Dabei wird ein mehrlagiger, harzgetränkter Inlinerschlauch in den betroffenen Kanalabschnitt eingebracht. Der in dem Kanalabschnitt eingebrachte Inlinerschlauch wird durch Einleiten eines Druckmediums, z. B. von Druckluft, endgültig aufgerichtet und an die Innenwandung des Kanalabschnittes angedrückt, also auf das Maß des alten Kanalrohrs kalibriert. Der kalibrierte Inlinerschlauch wird durch ein Aushärtungsverfahren, z. B. durch Einstrahlung von UV-Licht oder durch externe Wärmezufuhr ausgehärtet.

In einem Vorbereitungsschritt wird für das konkrete Kanalprofil, also Kreisprofil oder Eiprofil, errechnet, welche Abschnitte auf dem Umfange des im Kanalrohr kalibrierten Inlinerschlauches besonders beul- und durchschlagsgefährdet sind. Der dann verwendete Inlinerschlauch wird so mit Verstärkungen versehen, daß die Empfindlichkeit gegen Beulen und Durchschlagen verhindert oder zumindest verringert wird. Der erfindungsgemäß eingesetzte Inlinerschlauch hat also eine unterschiedliche Wanddicke auf seinem Umfang. Im übrigen hat dieser Inlinerschlauch eine ausreichende, sehr viel geringere Wanddicke, so daß der Strömungsquerschnitt im sanierten Kanalrohr so wenig wie möglich verringert ist gegenüber dem Strömungsquerschnitt des noch nicht sanierten Kanalrohrs.

Weiter oben ist erläutert worden, wo bei einem eiförmigen Kanalprofil Verstärkungen in besonderem Maße angeraten sind, darauf darf verwiesen werden. Auch das Thema "Aufpolsterung" zum Ausgleich besonders starker Deformationen ist bereits erörtert worden.

Der Einsatz von Verstärkungen im Inlinerschlauch gemäß der Erfindung an vorberechneten Stellen wird durch das ausgerichtete Einbringen des Inlinerschlauches in das Kanalrohr positiv genutzt.

Die Darstellungen in der Zeichnung zeigen jeweils einen Inlinerschlauch 1 in einem Kanalabschnitt 2. Der Inlinerschlauch 1 ist mehrlagig dargestellt, wobei die Darstellung zur Verdeutlichung zeichnerisch auseinandergezogen ist. In der Darstellung sind nur die Lagen 1a, 1b etc. des Inlinerschlauches 1, nicht die stets vorhandenen äußeren und inneren schützenden Folienlagen eingezeichnet.

Für die Erfindung ist wesentlich, daß der Inlinerschlauch 1 in bestimmten, zuvor für das konkrete Kanalprofil ermittelten Abschnitten 3 mit Verstärkungen 4 versehen ist. In Fig. 1 sind nur zwei Lagen 1a, 1b eines mehrlagigen Inlinerschlauchs 1 dargestellt. Dieser befindet sich in einem Kanalabschnitt 2 mit kreisförmigem Querschnitt. Im seitlichen Bereich des Kanalabschnittes 2 befindet sich im dargestellten Ausführungsbeispiel die Verstärkung 4, die ein Einbeulen oder Durchschlagen von dem dortigen Bereich in den Kanalabschnitt 2 hinein verhindern soll.

Die Fig. 2, 3, 4 und 5 zeigen jeweils Kanalabschnitte mit einem eiförmigen Kanalprofil, ohne daß dies für die Lehre einschränkend zu verstehen ist. In den Fig. 2 bis 4 ist dargestellt, daß bei diesem eiförmigen Kanalprofil die Verstärkungen 4 in den Abschnitten 3 angeordnet sind, die in den Schrägseitenflächen des Kanalrohrs bzw. Kanalabschnittes 2 an diesem zur Anlage kommen. Daß diese Bereiche die am stärksten beul- und durchschlagsgefährdeten Bereiche sind, ist weiter oben erläutert worden.

Das in Fig. 2 dargestellte Ausführungsbeispiel macht deutlich, daß hier die Verstärkungen 4 nur durch Überlagerung der Ränder von Schlauchlagen 1a, 1b realisiert sind. Die gezielte Erhöhung der Wanddicke des Inlinerschlauches 1 in kritischen Bereichen erfolgt hier also durch eine gezielte Positionierung der Überlappungsbereiche der Ränder der Schlauchlagen 1a, 1b.

Demgegenüber zeigt das Ausführungsbeispiel aus Fig. 3, daß die Verstärkungen 4 in Form von zusätzlichen Einlagen realisiert sind. Diese Einlagen werden hinsichtlich ihrer Gestaltung nach Anforderungen der Praxis gestaltet. Gewebe, Gewirke und insbesondere Fasergelege aus unterschiedlichen Werkstoffen, eventuell auch aus Metall, aber auch Kunststoff-Formteile können hier zum Einsatz kommen. Wesentlich ist, daß die Verstärkungen 4 im Kanalabschnitt 2 an dessen Wandung im kalibrierten Zustand des Inlinerschlauches 1 eine zuvor errechnete Position zuverlässig einnehmen. Formteile bzw. flächige Einlagen als Verstärkungen 4, die ja in Längsrichtung hintereinander angeordnet sind, um die Einbringung des Inlinerschlauches 1 in den Kanalabschnitt 2 zu erlauben, sollten miteinander kettenartig verbunden werden.

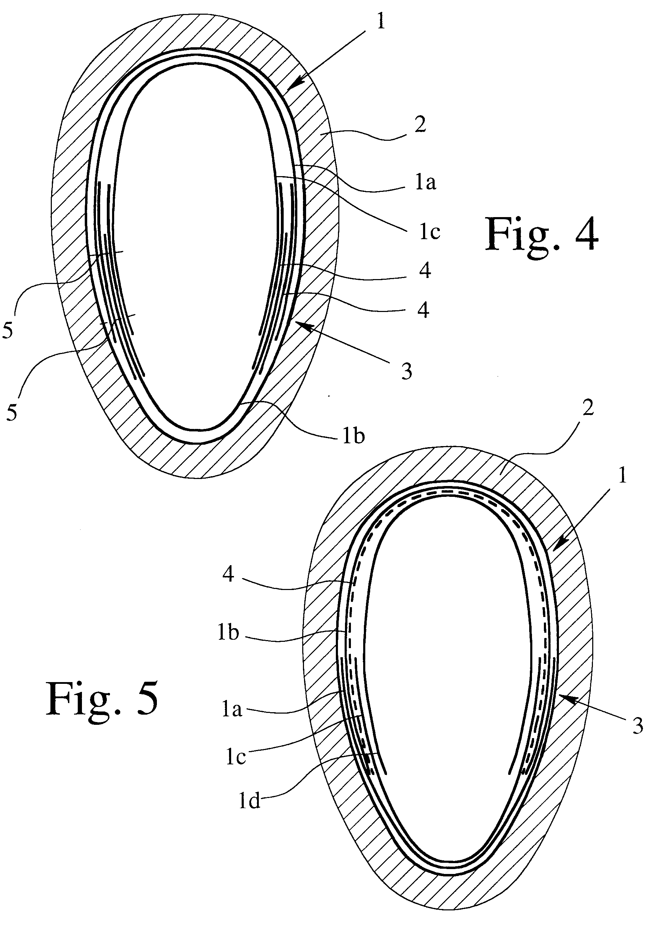

Fig. 4 zeigt, daß das System der Einlagen zur Verstärkung 4 dahingehend modifiziert werden kann, daß mehrere Einlagen als Verstärkungen 4, zum Teil einander überlappend, zwischen unterschiedlichen Schlauchlagen 1a, 1b, 1c angeordnet sein können.

Da für bestimmte Kanalprofile ziemlich genau bekannt ist, welche Abschnitte beul- und durchschlagsgefährdet sind, kann man die Lage der Verstärkungen 4 vorab näherungsweise errechnen. Eine Entwicklung einer Beule in einem Inlinerschlauch 1 gegebenenfalls bis zum Durchschlag erfolgt auf komplexe Weise. Es hat sich dabei gezeigt, daß man im Grunde genommen nur am Rande der entsprechenden Beule ein Herausbiegen des Materials des Inlinerschlauches 1 nach innen verhindern muß, um das Ausbilden der Beule insgesamt unterbinden zu können. Von dieser Analyse ausgehend ist nach weiter bevorzugter Lehre vorgesehen, daß die Dickenzunahme durch Verstärkungen in einem beul- und durchschlagsgefährdeten Abschnitt an dessen Rändern größer ist als im Bereich zwischen den Rändern.

Fig. 5 zeigt eine weitere Verteilung von Verstärkungen 4 auf einem größeren Umfang, wobei diese Verstärkungen 4 teilweise als Einlagen, teilweise durch überlappende Ränder der Schlauchlagen 1a, 1b, 1c, 1d realisiert werden.

Nicht dargestellt ist die bereits erläuterte Variante, bei der vorgesehen ist, daß eine besonders starke Deformation des konkreten Kanalprofils mittels einer Aufpolsterung im Inlinerschlauch 1 ausgeglichen wird.

Die Fig. 2 bis 5 zeigen unterschiedliche Arten und Lagen der Verstärkungen 4. Man kann vorsehen, daß die Schlauchlagen 1a, 1b, 1c, 1d randseitig mittels Befestigungsnähten oder Haftverbindungen 5, die sich bei hinreichender Dehnung des Inlinerschlauches lösen, fixiert sind. Entsprechend kann man vorsehen, daß die Verstärkungen 4 an einer oder mehreren Schlauchlagen 1a, 1b, 1c, 1d mittels Heftnähten, Klebung oder anderweitiger Haftverbindung 5 lagefixiert sind (siehe insgesamt Fig. 1, 3, 4).

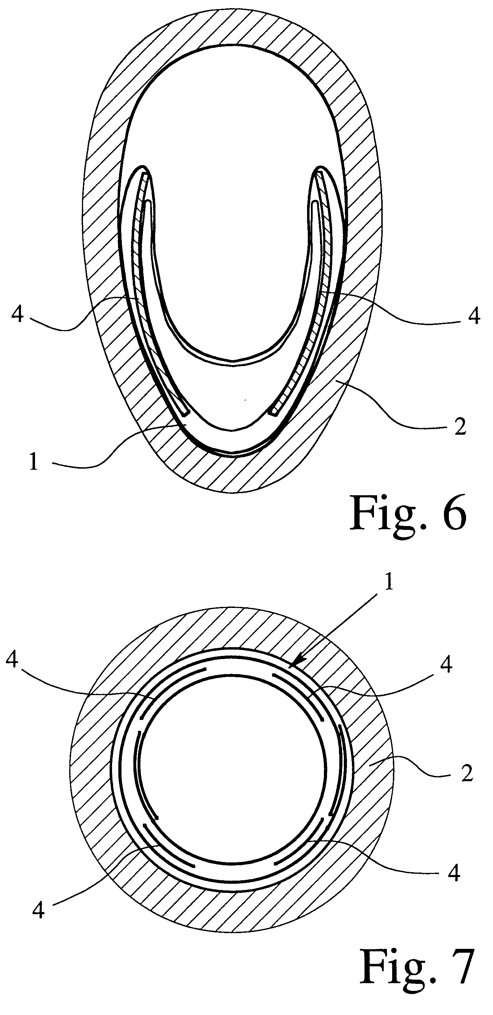

In weiteren Ausführungsbeispielen ist angedeutet, daß die Verstärkungen 4 praktisch schwimmend zwischen den einzelnen Schlauchlagen 1a, 1b, 1c, 1d des Inlinerschlauches 1 angeordnet sind, was die Maßveränderung beim Kalibrieren mitunter erleichtert (Fig. 5, Fig. 7).

Fig. 6 zeigt einen Vorteil der erfindungsgemäß vorgesehenen abschnittsweisen Verstärkungen 4 beim Einziehen des Inlinerschlauches 1 in den Kanalabschnitt 2. Man erkennt nämlich, daß die mit Verstärkungen 4 versehenen Abschnitte des Inlinerschlauches 1 sich beim Einziehen an den unteren Seitenabschnitten des Kanalrohrs bzw. Kananlabschnittes 2 anlegen. Dadurch gewinnt der Inlinerschlauch 1 beim Einlegen bereits eine stabile, sichere Ausrichtung.

Fig. 7 zeigt eine weitere Ausführung mit auf einem Kreis verteilten Verstärkungen 4 zur gezielten Beeinflussung des Beulverhaltens des Inlinerschlauches 1.

## Patentansprüche

1. Verfahren zur Sanierung von Kanalrohren mit folgenden Verfahrensschritten:
a) Ein mehrlagiger, harzgetränkter Inlinerschlauch wird in den betroffenen Kanalabschnitt eingebracht.
b) Der im Kanalabschnitt liegende Inlinerschlauch wird durch Einleiten eines Druckmediums, z. B. Druckluft, aufgerichtet und an die Innenwandung des Kanalabschnittes angedrückt (kalibriert).
c) Der kalibrierte Inlinerschlauch wird durch ein Aushärtungsverfahren, z. B. durch Einstrahlung von UV-Licht, ausgehärtet.
Dieses Verfahren ist gekennzeichnet durch folgende Merkmale:
d) In einem Vorbereitungsschritt wird für das konkrete Kanalprofil errechnet, welche Abschnitte auf dem Umfang des im Kanalrohr kalibrierten Inlinerschlauches besonders beul- und durchschlagsgefährdet sind.
e) Es wird ein Inlinerschlauch verwendet, der in den wesentlichen oder in allen besonders beul- und durchschlagsgefährdeten Abschnitten mit Verstärkungen versehen ist.

2. Verfahren nach Anspruch 1, dadurch gekennzeichnet, daß der Inlinerschlauch in entlang der Längsrichtung zusammengelegten Zustand in den Kanalabschnitt eingezogen wird.

3. Verfahren nach Anspruch 1 oder 2, dadurch gekennzeichnet, daß die Verstärkungen in Längsrichtung des Inlinerschlauches kettenartig miteinander verbunden werden.

4. Verfahren nach einem der Ansprüche 1 bis 3, dadurch gekennzeichnet, daß besonders starke Deformationen des konkreten Kanalprofils ermittelt und der Inlinerschlauch unabhängig von Verstärkungen mit einer entsprechenden Aufpolsterung bzw. entsprechenden Aufpolsterungen zur Berücksichtigung dieser Deformation oder Deformationen versehen wird.

5. Verfahren nach einem der Ansprüche 1 bis 4, dadurch gekennzeichnet, daß der Inlinerschlauch vor dem Einbau so zusammengelegt wird, daß die mit Verstärkungen versehenen Abschnitte sich beim Einbau an den errechneten Stellen des Kanalrohres anlehnen.

6. Verfahren nach einem der Ansprüche 1 bis 5, dadurch gekennzeichnet, daß der zusammengelegte Inlinerschlauch so abgelegt und/oder markiert wird, daß eine Ausrichtung im Kanalrohr möglich ist.

7. Inlinerschlauch (1) zur Verwendung bei einem Verfahren zur Sanierung von Kanalrohren, insbesondere bei einem Verfahren nach einem der Ansprüche 1 bis 6,
**dadurch gekennzeichnet,**
daß der Inlinerschlauch (1) in bestimmten, zuvor für das konkrete Kanalprofil errechneten bzw. ermittelten Abschnitten (3) mit Verstärkungen (4) versehen ist.

8. Inlinerschlauch (1) nach Anspruch 7, dadurch gekennzeichnet, daß die Verstärkungen (4) durch Überlagerung der Ränder von Schlauchlagen (1a, 1b) realisiert sind.

9. Inlinerschlauch (1) nach Anspruch 7, dadurch gekennzeichnet, daß die Verstärkungen (4) in Form von vorzugsweise flächigen Einlagen realisiert sind.

10. Inlinerschlauch nach Anspruch 7 oder 9, dadurch gekennzeichnet, daß die Verstärkungen (4) in Längsrichtung des Inlinerschlauches (1) kettenartig miteinander verbunden sind.

11. Inlinerschlauch (1) nach Anspruch 9 oder 10, dadurch gekennzeichnet, daß mehrere, vorzugsweise flächige Einlagen, z. T. einander überlappend zwischen unterschiedlichen Schlauchlagen (1a, 1b, 1c, 1d) angeordnet sind und/oder daß die als Verstärkungen (4) vorgesehenen Einlagen in sich steif ausgeführt sind.

12. Inlinerschlauch nach einem der Ansprüche 7 bis 12, dadurch gekennzeichnet, daß die Verstärkungen (4) aus Glasfasermaterial, oder aus Metall, Kohlefaser o. dgl. bestehen und/oder daß in einem beul- und durchschlaggefährdeten Abschnitt die Verstärkungen primär an dessen Rändern angeordnet sind und/oder daß die Schlauchlagen (1a, 1b, 1c, 1d) randseitig mittels Befestigungsnähten oder Haftverbindungen (5), die sich bei Dehnung des Inlinerschlauches (1) lösen, fixiert sind und/oder daß die Verstärkungen (4) an einer oder mehreren Schlauchlagen (1a, 1b, 1c, 1d) mittels Heftnahten, Klebung oder anderweitiger Haftverbindung (5), ggf. solchen, die sich bei Dehnung oder Relativbewegung lösen, lagefixiert sind.
